# EUROPEAN PATENT APPLICATION

(11) **EP 3 197 207 A1**
(43) Date of publication of application: **26.07.2017**
(21) Application number: 15841695.8
(22) Date of filing: 09.04.2015
(51) Int. Cl.: H04W 28/16

(54) **METHOD FOR MANAGING APPLICATION RESOURCES AND REGISTERED NODE IN M2M**

(30) Priority: 19.09.2014 CN 201410484282
(71) Applicant: ZTE Corporation, Shenzhen City, Guangdong Province 518057 (CN)
(72) Inventor: WU, Hao, Shenzhen Guangdong 518057 (CN)
(74) Representative: Deambrogi, Edgardo
(86) International application number: PCT/CN2015/076188
(87) International publication number: WO 2016/041342

(57) **Abstract**

A method and registration node for managing an application resource in Machine to Machine (M2M) are provided. The method includes that: an Application Entity (AE) or a Common Service Entity (CSE) sends a node resource creation request to a registration CSE of the AE or the CSE to request a resource for an application node where the AE is located or an intermediate node where the CSE is located; and the registration CSE creates a node resource for the application node or the intermediate node, and establishes an association relationship between an AE resource which has been created for the AE and the currently created node resource, or establishes an association relationship between a CSE resource which has been created for the CSE and the currently created node resource. By the technical solutions, association between the AE resource and the node to which the AE resource belongs or between the CSE resource and the node to which the CSE resource belongs on the registration CSE is implemented.

## Description

### Technical Field

The present disclosure relates to M2M communications, and more particularly to a method and registration node for managing an application resource in M2M.

### Background

An M2M communication network consists of M2M nodes and a bearer network. The M2M nodes implement mutual communication through the bearer network. An M2M node at least includes an Application Entity (AE) or a Common Service Entity (CSE). The AE is a logical unit for executing M2M applications. The CSE is a logical unit for managing and serving M2M applications.

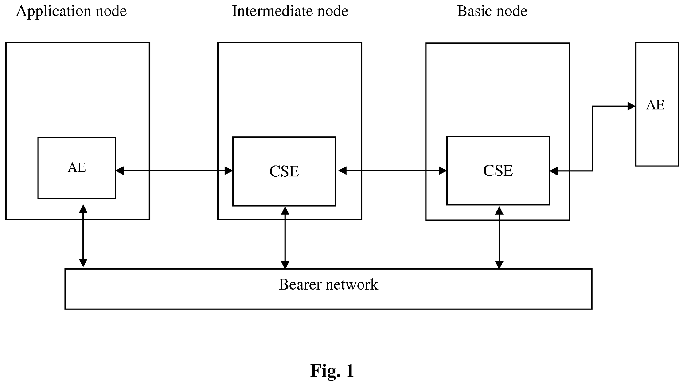

Fig. 1 is a structure diagram of an M2M communication network according to a related technology. In the figure, the M2M nodes include an application node including an AE, an intermediate node including a CSE and a basic node including a CSE. The application node is an end execution node, such as an intelligent electric meter, a temperature measurement and control sensor, a fire alarm and an intelligent home appliance. The intermediate node is middleware which connects the end execution nodes to a network-side server, such as a gateway. The basic node is a server at the network side, and an application registered on the basic node may be a management platform of an M2M service provider.

Communication between M2M applications is implemented by interaction between the CSE. In order to achieve the interaction, the AE on the application node is required to initiate registration to the CSE of the intermediate node, and the CSE of the intermediate node is required to initiate registration to the CSE of the basic node. The CSE on the intermediate node is called as a local CSE or registration CSE of the AE on the application node. The CSE on the basic node is called as a local CSE or registration CSE of the CSE on the intermediate node.

In the related technology, when the registration CSE of the AE on the application node and the registration CSE of the CSE on the intermediate node respectively manage an AE resource on the application node and a CSE resource on the intermediate node, the application node bearing the AE resource and the intermediate node bearing the CSE resource are not considered.

In addition, when the application node and the intermediate node are replaced and replacing application node and intermediate node run the same applications as the replaced application node and intermediate node, running data of the applications on the replaced application node and intermediate node is usually expected to be reserved. However, the registration CSE of the AE on the application node may delete locally stored AE resource after learning about the deletion of the application node. Similarly, in the related technology, the registration CSE of the CSE on the intermediate node may delete locally stored CSE resource on the intermediate node after learning about the deletion of the intermediate node. Therefore, after a node replacement operation is executed, the replacing application node and intermediate node are required to initiate registration to the CSEs and create corresponding resources again when being started. As a result, not only may earlier application data be lost, but also a repeated resource creation process may influence working efficiency of M2M.

### Summary

Embodiments of the present disclosure provide a method and registration node for managing an application resource in M2M, so as to solve the technical problem of how to associate an AE resource with a node to which the AE resource belongs and associate a CSE resource with a node to which the CSE resource belongs on registration CSEs.

In order to solve the technical problem, an embodiment of the present disclosure provides a method for managing an application resource, which may include the following steps.

An AE or a CSE sends a node resource creation request to a registration CSE of the AE or the CSE to request a resource for an application node where the AE is located or an intermediate node where the CSE is located.

The registration CSE creates a node resource for the application node or the intermediate node, and establishes an association relationship between an AE resource which has been created for the AE and the currently created node resource, or establishes an association relationship between a CSE resource which has been created for the CSE and the currently created node resource.

In an exemplary embodiment, after the AE or the CSE sends the node resource creation request to the registration CSE to request the resource for the application node or the intermediate node, the method may further include the following steps.

When the AE is located on a new application node or the CSE is located on a new intermediate node in case of node replacement, the AE or the CSE sends a node resource deletion request to the registration CSE.

The registration CSE deletes the node resource created for the application node or the intermediate node and the association relationship.

In an exemplary embodiment, the method may further include the following steps.

After the AE or the CSE sends the node resource deletion request to the registration CSE, the AE or the CSE sends a node resource creation request to the registration CSE to request a resource for the new application node or the new intermediate node.

The registration CSE creates a new node resource for the new application node or the new intermediate node, and establishes an association relationship between the AE resource and the currently created node resource, or establishes an association relationship between the CSE resource and the currently created node resource.

In an exemplary embodiment, an attribute of the AE resource may include an AE identity, and an attribute of the CSE resource may include a CSE identity. The node resource creation request may include the AE identity of the AE or the CSE identity of the CSE, a node identity and a type of the resource to be created.

The step that the association relationship between the AE resource and the currently created node resource is established may include that: the association relationship between the AE resource of which the attribute includes the AE identity and the currently created node resource is established.

The step that the association relationship between the CSE resource and the currently created node resource is established may include that: the association relationship between the CSE resource of which the attribute includes the CSE identity and the currently created node resource is established.

In an exemplary embodiment, the step that the association relationship between the AE resource and the currently created node resource is established may include that: a value of a "node connection" attribute of the AE resource is set to be the node identity or an address of the currently created node resource; and

The step that the association relationship between the CSE resource and the currently created node resource is established may include that: a value of a "node connection" attribute of the CSE resource is set to be the node identity or an address of the currently created node resource.

In order to solve the technical problem, an embodiment of the present disclosure further provides a registration node for managing an application resource, which may include: a resource management module and a resource association module.

The resource management module may be arranged to, after receiving a node resource creation request sent by an AE or a CSE, create a node resource for an application node where the AE is located or an intermediate node where the CSE is located.

The resource association module may be arranged to establish an association relationship between an AE resource which has been created for the AE and the currently created node resource, or establish an association relationship between a CSE resource which has been created for the CSE and the currently created node resource.

In an exemplary embodiment, the resource management module may further be arranged to, when receiving a node resource deletion request from the AE or the CSE after receiving the node resource creation request sent by the AE or the CSE, delete the node resource created for the application node or the intermediate node and the association relationship.

In an exemplary embodiment, the resource management module may further be arranged to, when receiving a node resource creation request of requesting a resource for a new application node or a new intermediate node from the AE or the CSE after receiving the node resource deletion request from the AE or the CSE, create a new node resource for the new application node or the new intermediate node.

In an exemplary embodiment, an attribute of the AE resource may include an AE identity, and an attribute of the CSE resource may include a CSE identity; the node resource creation request may include the AE identity of the AE or the CSE identity of the CSE, a node identity and a type of the resource to be created.

The resource association module may be arranged to establish the association relationship between the AE resource which has been created for the AE and the currently created node resource in the following manner:
establishing the association relationship between the AE resource of which the attribute includes the AE identity and the currently created node resource.

The resource association module may be arranged to establish the association relationship between the CSE resource which has been created for the CSE and the currently created node resource in the following manner:
establishing the association relationship between the CSE resource of which the attribute includes the CSE identity and the node resource.

In an exemplary embodiment, The resource association module may be arranged to establish the association relationship between the AE resource which has been created for the AE and the currently created node resource in the following manner:
setting a value of a "node connection" attribute of the AE resource to be the node identity or an address of the currently created node resource.

The resource association module may be arranged to establish the association relationship between the CSE resource and the currently created node resource in the following manner:
setting a value of a "node connection" attribute of the CSE resource to be the node identity or an address of the currently created node resource.

In order to solve the technical problem, an embodiment of the present disclosure further provides a computer storage medium, in which a computer-executable instruction may be stored, the computer-executable instruction being arranged to execute the abovementioned method.

In the technical solutions, the registration CSE creates the node resource for the node where the AE or the CSE is located, and establishes the association relationship between the AE resource and the created node resource, or establishes the association relationship between the CSE resource and the created node resource. By virtue of the technical solution, a purpose of associating the AE resource with the node to which the AE resource belongs or associating the CSE resource with the node to which the CSE resource belongs on the registration CSE can be achieved. In addition, in the technical solutions, when the node where the AE or the CSE is located is replaced, the AE resource or CSE resource stored in the registration CSE is not deleted, and instead, the association relationship between the replacing node and the AE resource or the CSE resource is established, so that the replacing node may continue using the AE resource or CSE resource before node replacement. In this way, the problem of running data loss under the condition that the application node and/or the intermediate node are/is replaced and the replacing nodes/node are/is expected to reserve running data of the replaced nodes/node is solved.

### Brief Description of the Drawings

Fig. 1 is a structure diagram of an M2M communication network according to the related technology;
Fig. 2 is a flowchart of a method for managing an application resource according to an embodiment; and
Fig. 3 is a module diagram of a registration node for managing an application resource according to an embodiment.

### Detailed Description of the Embodiments

The embodiments of the present disclosure will be described below with reference to the drawings in detail. It is important to note that the embodiments in the present disclosure and characteristics in the embodiments may be freely combined under the condition of no conflicts.

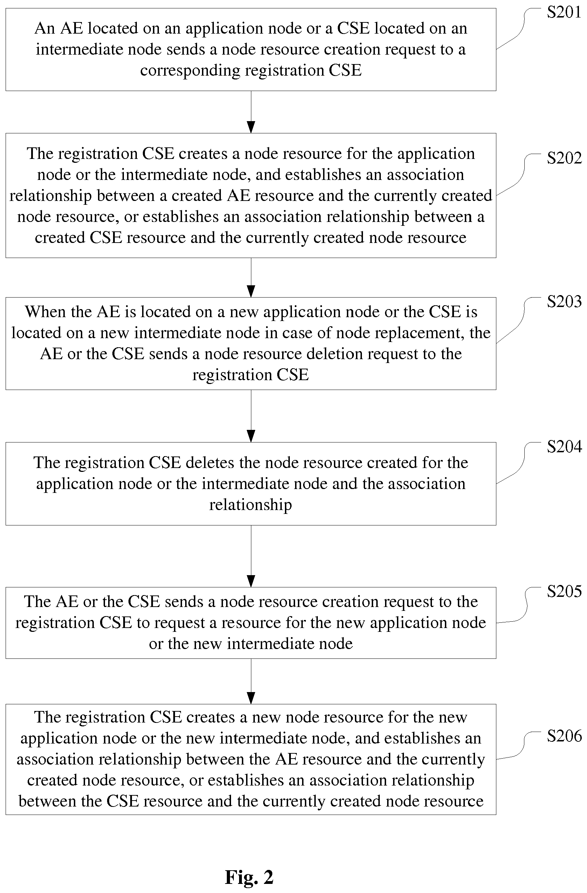

Fig. 2 is a flowchart of a method for managing an application resource according to an embodiment.

At a step of S201, an AE located on an application node or a CSE located on an intermediate node sends a node resource creation request to a corresponding registration CSE to request a resource for the application node where the AE is located or the intermediate node where the CSE is located.

The node resource creation request includes: an AE identity of the AE or a CSE identity of the CSE, a node identity and a type of the resource to be created. The type of the resource to be created may be a node type.

At a step of S202, the registration CSE creates a node resource for the application node or the intermediate node, and establishes an association relationship between an AE resource which has been created for the AE and the currently created node resource, or establishes an association relationship between a CSE resource which has been created for the CSE and the currently created node resource.

An attribute of the AE resource includes the AE identity, and an attribute of the CSE resource includes the CSE identity.

The registration CSE creates a resource of the node type after receiving the resource creation request. A "node identity" attribute may be set for the node resource, and an attribute value of the "node identity" attribute is the node identity carried in the resource creation request.

In an exemplary embodiment, the step that the registration CSE establishes the association relationship between the AE resource and the currently created node resource includes that:
the association relationship between the AE resource of which the attribute includes the AE identity and the currently created node resource is established.

In an exemplary embodiment, the step that the registration CSE establishes the association relationship between the CSE resource and the currently created node resource includes that:
the association relationship between the CSE resource of which the attribute includes the CSE identity and the currently created node resource is established.

In an exemplary embodiment, the step that the registration CSE establishes the association relationship between the AE resource and the currently created node resource includes that:
a value of a "node connection" attribute of the AE resource is set to be the node identity or an address of the currently created node resource.

In an exemplary embodiment, the step that the registration CSE establishes the association relationship between the CSE resource and the currently created node resource includes that:
a value of a "node connection" attribute of the CSE resource is set to be the node identity or an address of the currently created node resource.

At a step of S203, when the AE is located on a new application node or the CSE is located on a new intermediate node in case of node replacement, the AE or the CSE sends a node resource deletion request to the registration CSE.

The node resource deletion request includes: a node replacement indication, the AE or CSE identity included in the replaced node and the address of the replaced node resource.

At a step of S204, the registration CSE deletes the node resource created for the application node or the intermediate node and the association relationship.

The registration CSE finds the node resource to be deleted according to the address of the replaced node resource.

In an exemplary embodiment, the step that the registration CSE deletes the established association relationship includes that:
the node connection attribute of the AE or CSE resource is deleted, or, the value of the node connection attribute of the AE or CSE resource is set to be null.

At a step of S205, the AE or the CSE sends a node resource creation request to the registration CSE to request a resource for the new application node or the new intermediate node.

The node resource creation request includes: the AE identity or the CSE identity, a new node identity and a type of the resource to be created.

At a step of S206, the registration CSE creates a new node resource for the new application node or the new intermediate node, and establishes an association relationship between the AE resource and the currently created node resource, or establishes an association relationship between the CSE resource and the currently created node resource.

In the technical solution, after the registration CSE receives the resource deletion request from the AE or the CSE, the node resource created for the application node or the intermediate node may also be deleted at first. After the node resource creation request of requesting the resource for the new application node or the new intermediate node is received from the AE or the CSE, the association relationship between the AE resource or the CSE resource and the old application node or the old intermediate node is deleted, the new node resource is created for the new application node or the new intermediate node, and the association relationship between the AE resource and the currently created node resource is established, or the association relationship between the CSE resource and the currently created node resource is established. Alternatively, after the registration CSE deletes the node resource created for the application node or the intermediate node, a timer may be started, and if the node resource creation request of requesting a resource for the new application node or the new intermediate node has yet not been received from the AE or the CSE after timing time of the timer ends, the association relationship between the AE resource or the CSE resource and the old application node or the old intermediate node is deleted.

In the technical solution, the registration CSE creates the node resource for the node where the AE or the CSE is located, and establishes the association relationship between the AE resource and the created node resource, or establishes the association relationship between the CSE resource and the created node resource. By virtue of the technical solution, a purpose of associating the AE resource with the node to which the AE resource belongs or associating the CSE resource with the node to which the CSE resource belongs on the registration CSE can be achieved. In addition, in the technical solution, when the node where the AE or the CSE is located is replaced, the AE resource or CSE resource stored in the registration CSE is not deleted, and instead, the association relationship between the replacing node and the AE resource or the CSE resource is established, so that the replacing node may continue using the AE resource or CSE resource before node replacement. In this way, the problem of running data loss under the condition that the application node and/or the intermediate node are/is replaced and the replacing nodes/node are/is expected to reserve running data of the replaced nodes/node is solved.

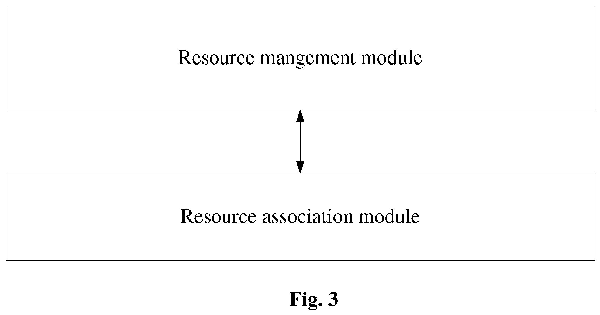

Fig. 3 is a module diagram of a registration node for managing an application resource according to an embodiment.

The registration node includes: a resource management module and a resource association module.

The resource management module is arranged to, after receiving node resource creation request sent by an AE or a CSE, create a node resource for an application node where the AE is located or an intermediate node where the CSE is located.

The node resource creation request includes: an AE identity of the AE or a CSE identity of the CSE, a node identity and a type of the resource to be created. The type of the resource to be created may be a node type.

The resource association module is arranged to establish an association relationship between an AE resource which has been created for the AE and the currently created node resource, or establish an association relationship between a CSE resource which has been created for the CSE and the currently created node resource. An attribute of the AE resource includes the AE identity, and an attribute of the CSE resource includes the CSE identity.

In an exemplary embodiment, the resource association module is arranged to establish the association relationship between the AE resource which has been created for the AE and the currently created node resource in the following manner:
establishing the association relationship between the AE resource of which the attribute includes the AE identity and the currently created node resource.

The resource association module is arranged to establish the association relationship between the CSE resource which has been created for the CSE and the currently created node resource in the following manner:
establishing the association relationship between the CSE resource of which the attribute includes the CSE identity and the node resource.

In an exemplary embodiment, the resource association module is arranged to establish the association relationship between the AE resource which has been created for the AE and the currently created node resource in the following manner:
setting a value of a "node connection" attribute of the AE resource to be the node identity or an address of the currently created node resource.

The resource association module is arranged to establish the association relationship between the CSE resource and the currently created node resource in the following manner:
setting a value of a "node connection" attribute of the CSE resource to be the node identity or an address of the currently created node resource.

The resource management module is further arranged to, when receiving a node resource deletion request from the AE or the CSE after receiving the node resource creation request sent by the AE or the CSE, delete the node resource created for the application node or the intermediate node and the association relationship.

In an exemplary embodiment, the resource management module is arranged to delete the established association relationship between the AE resource which has been created for the AE and the currently created node resource or delete the established association relationship between the CSE resource and the currently created node resource in the following manner:
the node connection attribute of the AE or CSE resource is deleted, or, the value of the node connection attribute of the AE or CSE resource is set to be null.

The resource management module is further arranged to, when receiving a node resource creation request of requesting a resource for a new application node or a new intermediate node from the AE or the CSE after receiving the node resource deletion request from the AE or the CSE, create a new node resource for the new application node or the new intermediate node.

The node resource creation request of requesting the resource for the new application node or the new intermediate node includes: the AE identity or the CSE identity, a new node identity and a type of the resource to be created.

In the technical solution, the resource management module may further deletes the node resource created for the application node or the intermediate node only after receiving the node resource deletion request from the AE or the CSE. After receiving the node resource creation request of requesting the resource for the new application node or the new intermediate node from the AE or the CSE, deletes the association relationship between the AE resource or the CSE resource and the old application node or the old intermediate node, creates the new node resource for the new application node or the new intermediate node, and establishes the association relationship between the AE resource and the currently created node resource, or establishes the association relationship between the CSE resource and the currently created node resource. Alternatively, after deleting the node resource created for the application node or the intermediate node, the resource management module may start a timer, and if not receiving the node resource creation request of requesting the resource for the new application node or the new intermediate node from the AE or the CSE after timing time of the timer ends, deletes the association relationship between the AE resource or the CSE resource and the old application node or the old intermediate node.

In the technical solution, the registration CSE creates the node resource for the node where the AE or the CSE is located, and establishes the association relationship between the AE resource and the created node resource, or establishes the association relationship between the CSE resource and the created node resource. By virtue of the technical solution, a purpose of associating the AE resource with the node to which the AE resource belongs or associating the CSE resource with the node to which the CSE resource belongs on the registration CSE can be achieved. In addition, in the technical solution, when the node where the AE or the CSE is located is replaced, the AE resource or CSE resource stored in the registration CSE is not deleted, and instead, the association relationship between the replacing node and the AE resource or the CSE resource is established, so that the replacing node may continue using the AE resource or CSE resource before node replacement. In this way, the problem of running data loss under the condition that the application node and/or the intermediate node are/is replaced and the replacing nodes/node are/is expected to reserve running data of the replaced nodes/node is solved.

Those skilled in the art should know that all or part of the steps in the method may be implemented by related hardware instructed by a program, and the program may be stored in a computer-readable storage medium, such as a read-only memory, a magnetic disk or an optical disk. Alternatively, all or part of the steps of the embodiments may also be implemented by virtue of one or more integrated circuits, and correspondingly, each module/unit in the embodiments may be implemented by adopting a hardware form, and may also be implemented by adopting a software function module form. The present disclosure is not limited to a hardware and software combination in any specific form.

It is important to note that the prevent disclosure may have many other embodiments, those skilled in the art may make various corresponding variations and transformations to the present disclosure without departing from the essence of the present disclosure, but these corresponding variations and transformations shall fall within the scope of protection of the appended claims of the present disclosure.

### Industrial Applicability

In the technical solutions, the purpose of associating the AE resource with the node to which the AE resource belongs or associating the CSE resource with the node to which the CSE resource belongs on the registration CSE can be achieved. In addition, in the technical solutions, when the node where the AE or the CSE is located is replaced, the AE resource or CSE resource stored in the registration CSE is not deleted, and instead, the association relationship between the replacing node and the AE resource or the CSE resource is established, so that the replacing node may continue using the AE resource or CSE resource before node replacement. In this way, the problem of running data loss under the condition that the application node and/or the intermediate node are/is replaced and the replacing nodes/node are/is expected to reserve running data of the replaced nodes/node is solved.

## Claims

1. A method for managing an application resource, comprising:
sending, by an Application Entity, AE, or a Common Service Entity, CSE, a node resource creation request to a registration CSE of the AE or the CSE to request a resource for an application node where the AE is located or an intermediate node where the CSE is located; and
creating, by the registration CSE, a node resource for the application node or the intermediate node, and establishing an association relationship between an AE resource which has been created for the AE and the currently created node resource, or establishing an association relationship between a CSE resource which has been created for the CSE and the currently created node resource.

2. The method as claimed in claim 1, further comprising:
after sending, by the AE or the CSE, the node resource creation request to the registration CSE to request the resource for the application node or the intermediate node, when the AE is located on a new application node or the CSE is located on a new intermediate node in case of node replacement, sending, by the AE or the CSE, a node resource deletion request to the registration CSE; and
deleting, by the registration CSE, the node resource created for the application node or the intermediate node and the association relationship.

3. The method as claimed in claim 2, further comprising:
after sending, by the AE or the CSE, the node resource deletion request to the registration CSE, sending, by the AE or the CSE, a node resource creation request to the registration CSE to request a resource for the new application node or the new intermediate node; and
creating, by the registration CSE, a new node resource for the new application node or the new intermediate node, and establishing an association relationship between the AE resource and the currently created node resource, or establishing an association relationship between the CSE resource and the currently created node resource.

4. The method as claimed in claim 1 or 2 or 3, wherein
an attribute of the AE resource comprises an AE identity, and an attribute of the CSE resource comprises a CSE identity; the node resource creation request comprises the AE identity of the AE or the CSE identity of the CSE, a node identity and a type of the resource to be created;
establishing the association relationship between the AE resource and the currently created node resource comprises:
establishing the association relationship between the AE resource of which the attribute comprises the AE identity and the currently created node resource; and
establishing the association relationship between the CSE resource and the currently created node resource comprises:
establishing the association relationship between the CSE resource of which the attribute comprises the CSE identity and the currently created node resource.

5. The method as claimed in claim 4, wherein
establishing the association relationship between the AE resource and the currently created node resource comprises:
setting a value of a "node connection" attribute of the AE resource to be the node identity or an address of the currently created node resource; and
establishing the association relationship between the CSE resource and the currently created node resource comprises:
setting a value of a "node connection" attribute of the CSE resource to be the node identity or an address of the currently created node resource.

6. A registration node for managing an application resource, comprising: a resource management module and a resource association module, wherein
the resource management module is arranged to, after receiving a node resource creation request sent by an Application Entity, AE, or a Common Service Entity, CSE, create a node resource for an application node where the AE is located or an intermediate node where the CSE is located; and
the resource association module is arranged to establish an association relationship between an AE resource which has been created for the AE and the currently created node resource, or establish an association relationship between a CSE resource which has been created for the CSE and the currently created node resource.

7. The registration node as claimed in claim 6, wherein
the resource management module is further arranged to, when receiving a node resource deletion request from the AE or the CSE after receiving the node resource creation request sent by the AE or the CSE, delete the node resource created for the application node or the intermediate node and the association relationship.

8. The registration node as claimed in claim 7, wherein
the resource management module is further arranged to, when receiving a node resource creation request of requesting a resource for a new application node or a new intermediate node from the AE or the CSE after receiving the node resource deletion request from the AE or the CSE, create a new node resource for the new application node or the new intermediate node.

9. The registration node as claimed in claim 6 or 7 or 8, wherein
an attribute of the AE resource comprises an AE identity, and an attribute of the CSE resource comprises a CSE identity; the node resource creation request comprises the AE identity of the AE or the CSE identity of the CSE, a node identity and a type of the resource to be created;
the resource association module is arranged to establish the association relationship between the AE resource which has been created for the AE and the currently created node resource in the following manner:
establishing the association relationship between the AE resource of which the attribute comprises the AE identity and the currently created node resource; and
the resource association module is arranged to establish the association relationship between the CSE resource which has been created for the CSE and the currently created node resource in the following manner:
establishing the association relationship between the CSE resource of which the attribute comprises the CSE identity and the node resource.

10. The registration node as claimed in claim 9, wherein
The resource association module is arranged to establish the association relationship between the AE resource which has been created for the AE and the currently created node resource in the following manner:
setting a value of a "node connection" attribute of the AE resource to be the node identity or an address of the currently created node resource; and
the resource association module is arranged to establish the association relationship between the CSE resource and the currently created node resource in the following manner:
setting a value of a "node connection" attribute of the CSE resource to be the node identity or an address of the currently created node resource.

11. A computer storage medium, in which a computer-executable instruction is stored, the computer-executable instruction being arranged to execute the method as claimed in any one of claims 1-5.
